# EUROPEAN PATENT SPECIFICATION

(11) **EP 1 865 721 B1**
(45) Date of publication and mention of the grant of the patent: **03.11.2010**
(21) Application number: 07252048.9
(22) Date of filing: 18.05.2007
(51) Int. Cl.: H04N 7/16, H04N 7/24, H04N 5/00, G06F 17/30, H04N 7/173

(54) **System for and method of accessing multiple data sources**
System und Verfahren für den Zugriff auf mehrere Datenquellen
Système et procédé d'accès à plusieurs sources de données

(30) Priority: 19.05.2006 GB 0610056
(43) Date of publication of application: 12.12.2007
(73) Proprietor: BRITISH BROADCASTING CORPORATION, Tadworth, Surrey KT20 6NP (GB)
(72) Inventor: Hunter, Jeffrey Robert, Surrey KT20 6NP (GB); Poole, Christopher Edward, Surrey KT20 6NP (GB); Bradbury, Richard James, Surrey KT20 6NP (GB); Foreman, Robert Wallace, Surrey KT20 6NP (GB)
(74) Representative: Reeve, Nicholas Edward

(56) References cited:
- EP-A- 1 365 587
- US-A- 6 029 200
- US-A1- 2002 095 479
- US-A1- 2005 086 347
- US-B2- 7 206 819

## Description

The present invention relates to a system for and a method of accessing multiple data sources, and in particular to systems and methods for use in interactive television applications.

To date the majority of interactive television applications have been developed on the basis that a single data delivery mechanism will be provided by the target platform. In many cases, delivery has relied on the use of a broadcast carousel. The broadcast carousel refers to the data transmitted wirelessly on television transmission frequencies from a broadcast transmitter to a broadcast receiver, or alternatively on satellite frequencies or via cable. The data typically comprises the content making up the broadcaster's programming schedule, such as audio and video streams, images, text and application code, as well as additional information such as scheduling information for the viewer, and additional reference material related to the broadcaster, particular programs, or the region in which the viewer is based.

However, increasing numbers of platforms are emerging where interactive applications are able to exploit multiple data sources - so called "hybrid platforms". For example, in addition to accessing data from the broadcast stream it may be possible to access data from mass storage internal to the host device, such as a hard disk acting as a digital video recorder (DVR) for storing recorded broadcast material or other content, or even via bi-directional connections to a server which is external to the host receiver (e.g. IPTV and Home Networks). We have appreciated that as the connectivity of home electronic devices increases, it is likely that there will be a need for interactive television devices to be able to read content stored on other accessible file storage devices, such as a removable memory device, mobile terminal, personal computer or games console. Additionally, as the functionality of the interactive television apparatus increases, it may be necessary to allow a larger number of interactive applications to be accommodated on the apparatus.

We have appreciated that the increasing number of locations where data may be accessed, and the increasing number of communication links over which a broadcaster may supply data, present a number of problems for application developers and for broadcasters alike. For applications running on interactive television devices, it is necessary to be able to determine the location of desired content. The use of an increasing number of data sources can mean that an application will not know where to look for the desired data. Additionally, given that technical faults in communication links arise from time to time, dependency on an increased number of links means that it is essential to manage failures in those links more effectively.

The ability for an interactive application to obtain data from one of a number of accessible data sources does not fundamentally present too much of a challenge. For example, the Uniform Resource Locator (URL) syntax can be adopted as the means by which an interactive application can explicitly identify a particular data source as part of a reference to an item of data, using "http:" for an HTTP server, using "dvb:" for a broadcast carousel delivered within a DVB service, and using "file:" for local storage. However, this requires an interactive application to be able to associate a specific data source with each data request and this is not always straightforward to achieve. Which data will be available from which data source may not be known or agreed at the time of authoring the interactive application.

Mapping data requests to data sources is known more generally from other computing applications. For example, the Unix file system supports the concept of "mounting" a file system provided by one data source within the file system provided by another to create a composite file system. However, one problem with the Unix mount is that if a mounted data source becomes inaccessible the relevant part of the composite file system will also become inaccessible.

In the case of interactive television devices, some existing platforms support delivery of data to an interactive application over both a uni-directional broadcast path and a bi-directional return path. Unlike the Unix mount, these address the problem of an inaccessible data source by allowing more than one data source to be associated with each part of the composite file system, a "look-up order" being used to determine the order in which the data sources are queried. However, we have appreciated that the solution is not ideal as the look-up order is fixed at the platform level. This means that the same look-up order is used for all interactive applications running on any host device deployed in that platform.

In operational scenarios where the data source to use for a particular data request may vary (e.g. changing the data in a broadcast carousel to minimise the loading on servers in a bi-directional network), such systems provide no flexibility for changes in the look-up path as any changes made at the platform level would, not necessarily appropriately, affect all applications running on that device.

US 2002/0095479 discusses a method and apparatus for virtual namespaces for active computing environments.

### Summary of The Invention

The invention is defined in the independent claims to which reference should now be made. Advantageous features are set out in the dependent claims.

A corresponding method and computer program are provided.

### Brief Description of the Drawings

Preferred embodiments of the invention will now be described in more detail, by way of example, and with reference to the drawings in which:
Figure 1 is a schematic illustration of an interactive television receiver apparatus;
Figure 2 is a schematic illustration of the possible data source connections of an interactive receiver;
Figure 3 is a schematic illustration of a file space that has been mapped using the preferred embodiment of the invention;

### Detailed Description of the Preferred Embodiments

The preferred embodiment of the invention provides a hybrid file system. In an example embodiment this is associated with an interactive application running on an interactive television device. The implementation of the hybrid file system is configured according to rules defined by the interactive application, plus any system default behaviour. The interactive application makes references to data in the context of the hybrid file system using a common referencing syntax (i.e. without reference to a specific data source, although this is not precluded). The hybrid file system provides means to associate a data request to a specific data source using a process that can be opaque to the interactive application at the time of the request. Specifically, a mapping table is used to map certain locations within the file space provided by the hybrid file system to a location within one or more data sources.

This provides a number of advantages over existing systems in which the rules for resolving requests for data are fixed at the operating system level irrespective of the calling application: for example, local cache, then broadcast carousel, then return path. Also, the mapping of the data sources into the hybrid file system was formerly not under the direct control of the interactive application making dynamic changes under an application's control complex, if not impossible.

The hybrid file system is preferably provided as a set of objects in the form of files and directories structured as a file space; furthermore each data source contributing to the hybrid file system is provided as a set of objects in the form of files and directories structured as a file space. Additionally, a file may comprise discrete data, such as text or an image, or a continuous data stream, such as an audio and/or video data stream.

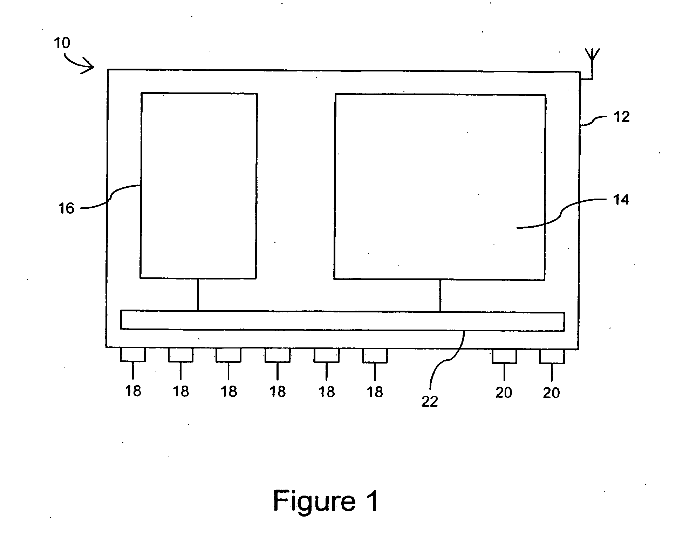

A preferred embodiment of the invention will now be described with reference to the figures. Figure 1 illustrates an interactive television receiver 10, having a housing 12 accommodating a memory 14, a processor 16, a bank of input terminals 18 and one or more output terminals 20. A data bus 22 connects the respective terminals to the processor and memory, and is operated under the control of software stored in the processor. The receiver shall be referred to as a Hybrid receiver, to indicate that it is configured of receiving data or content from a one or more data sources. One of these data sources may for example be a broadcast carousel.

The input terminals 18 provide a plurality of connection points for receiving data from an external source. One or more of the input terminals may for example be arranged to receive data from one or more broadcasters, such as audio, video, image and text data, as well as application code. Such input terminals may therefore be connected to an external antenna or aerial 30, to a cable television connection, or other appropriate means for delivering television programme content. Alternatively, an integral antenna may be provided within the housing or mounted on the exterior.

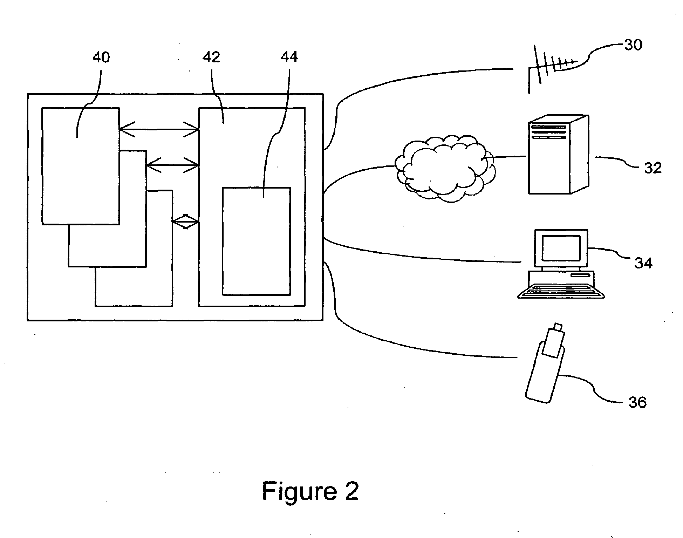

Other input terminals may also be available for connection to further sources of data, accessible via a uni-directional or more commonly a bi-directional, data connection. Such a source may be remote, such as a file server, accessible via a public data network such as the Internet 32, or via a private data network such as the return path of a cable television system. Alternatively, it may be a local data source, such as a personal computer 34, hard disk drive, a DVD drive, a removable memory device 36, a mobile phone or digital assistant, games console and so on, accessible via a dedicated connection between the receiver and the local data source or via a shared local network. These possibilities are illustrated in Figure 2.

In addition to external data access, either local or remote, data may be accessed from an internal source such as an internal hard disk drive, DVD drive or other memory cache.

In one embodiment, the hybrid receiver is provided with an "always on" broadband connection, or equivalent, to the Internet or some other IP based network, e.g. a home network. Suitably formatted content (in the form of discrete files, such as text, images and interactive application code) can then be stored by a data provider on one or more servers so that it is available over an HTTP (or HTTPS) connection. HTTP is preferred for the receiver as it is widely used and sufficiently lightweight to be implemented within the processor. Applications running on the receiver are preferably encoded in accordance with the MHEG (Multimedia Hypermedia Experts Group) standard, in any compatible computer language. The invention is not limited to this embodiment however, and other embodiments may rely on different connection configurations, data and application encodings, as will be apparent to the skilled man.

Figure 2 also schematically illustrates the logical processes and structures existing in the hybrid receiver 10 and embodied by computer program code. One or more application programs 40 are shown, each of which it is assumed provides some functionality to the user of the receiver. Such applications are not provided as part of the invention and are likely to be authored to meet evolving consumer needs. At least one application however will necessarily provide a user with the ability to view audio/visual content, such as broadcaster programmes, and to receive additional data such as text, images, non broadcast-carousel audio and video. Additional applications may for example provide specialised functions for playing games or listening to music, or navigating pages of information.

The preferred hybrid receiver uses a hybrid file system 42 to retrieve data. This file system provides a layer of abstraction over available data sources, such as the broadcast carousel and IP networks, allowing the different data sources to be more seamlessly integrated from the perspective of an interactive application. The hybrid file system is arranged to receive and process requests for data access from an application running on the receiver, and an application can additionally program and reconfigure the hybrid file system as its requirements change.

The hybrid file system uses a mapping table, illustrated as element 44 in Figure 2, to determine which data source, such as the broadcast carousel or an IP network or other data network, should handle a particular request as well as how to resolve the location of the requested data. In case the data is unavailable from one location, several alternatives may be specified in order of preference. If a particular data source is unable to resolve the request then the mapping table indicates the next data source to use. It should be noted that different data sources may return different data if asked to resolve a particular request. This provides a convenient means to adapt the behaviour of a running application depending on the available data delivery means. The mapping table is set up by instructions within application code and a function called 'Set Hybrid File System' is provided for this purpose.

The command structure for the 'Set Hybrid File System' function is: SHF(pathName, mappingList)

Where both pathName and mappingList are input parameters, and pathName specifies a path name which is to be mapped to a list of locations, while mappingList specifies a list of locations to which the path name should be mapped. The path name may be a full path name, e.g. referring to a particular target file or stream object, but is more usefully is entered as a partial path name, referring to a directory object, such as a root directory, or other location where a file, further directory, or stream may be stored.

The mapping table is configured for each application running in the processor through the use of the SHF function. The receiver preferably also has a default mapping to handle file requests that cannot be resolved by the mapping table.

The use of the SHF function is demonstrated by the following example:
SHF("//i/", "hftp:Hiptvl.bbc.co.uk/content/ http://iptv2.bbc.co.uk/content/") SHF("//i/r/", "DSM://c/r/")
SHF("//c/c2", "http://iptv1.bbc.co.uk/c2_web DSM://c/c2")

With these three calls to the SHF function, and the default mapping defined as "DSM://", the mapping table is set up as shown below:

| **pathName** | **Mapping** |
|---|---|
| // | DSM:// |
| | |
| //i/ | http://iptv1.bbc.co.uk/content/ |
| | http://iptv2.bbc.co.uk/content/ |
| | |
| //i/r/ | DSM://c/r/ |
| | |
| //c/c2 | http://iptv.bbc.co.uk/c2_web |
| | DSM://c/c2 |

Where "http" indicates a data source in the form of an IP connection over which HTTP is being used and "DSM" indicates a data source in the form of a broadcast carousel encoded as a DSM-CC Object Carousel.

This sets up a mapping from the path name to a list of data access locations. The mapping table therefore specifies not only which data source to use, but how to resolve a data access query within the file space presented by the data source. The path name is a path to an object within the hybrid file system that may be either a file or a directory. Each location in the mapping list maps to a file or directory within the file space presented by a data source. Objects in the hybrid file system are preferably mapped to objects of the same type within the file spaces presented by relevant data sources.

The order in which calls are made to the SHF function is not significant. If mappingList is a null string (and pathName is not empty), the mapping for that pathName (if any) will be removed. If pathName is a null string, all mappings except the default mapping will be removed.

References to files within the hybrid file system can be made using a URI of the form "hybrid://<path>/<filename>". Similarly references to directories within the hybrid file system can be made using a URI of the form "hybrid://<path>/".

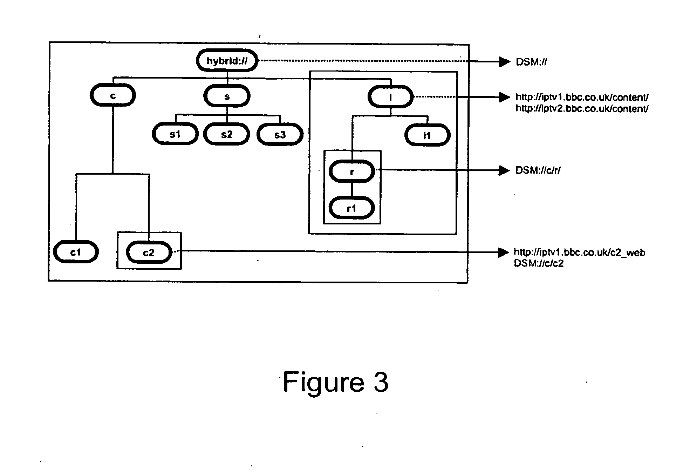

The hybrid file system that results from the mappings above is illustrated diagrammatically in Figure 3.

Firstly, as shown in the table above, the default mapping means that the root directory of the hybrid file system itself, referenced using "hybrid://", maps to "DSM://", which is the root directory of the broadcast carousel.

Then, the first execution of the SHF function specified a first mapping, that mapped the partial path name "//i/" to the location "http://iptv1.bbc.co.uk/content/" or, should this be unavailable, to the location "http://iptv2.bbc.co.uk/content/". The path name for this mapping relates to a directory object within the hybrid file system that may be referenced using the URI "hybrid://i/". Furthermore, unless explicitly overridden by another mapping this first mapping will be used in the resolution of any data access request to an object within the sub-tree of the hybrid file system that has "//i/" as its root directory, i.e. any reference of the form "hybrid://i/<path>/", in the case of a directory object, or "hybrid://i/<path>/<filename>", in the case of a file object.

The second execution of the SHF function however specified a second mapping relating to the path name "//i/r/", that is to be mapped to the location "DSM://c/r/". This second mapping relates to a directory object within the hybrid file system that may be referenced using the URI "hybrid://i/r/", and as such overrides the first mapping for part of the sub-tree of the hybrid file system that has "//i/" as its root directory, i.e. any reference of the form "hybrid://i/r/<path>/", in the case of a directory object, or "hybrid://i/r/<path>/<filename>", in the case of a file object.

The third execution of the SHF function specified a third mapping, that mapped "//c/c2" to the location "http://iptv.bbc.co.uklc2_web'', and then should this be unavailable, to the location "DSM://c/c2". This third mapping relates to a file object within the hybrid file system that may be referenced using the URI "hybrid://c/c2". As this mapping relates to a file object it need not be considered in the resolution of any other data access request.

To summarise, according to this mapping table, the following references to files within the hybrid file system would be resolved as indicated below. Where a reference is shown as resolving to multiple locations, the second location is used if the first location is found to be unavailable.
hybrid://i/i1 → http://iptv1.bbc.co.uk/content/i1
→ http://iptv2.bbc.co.uk/content/i1
hybrid://s/s1 → DSM://s/s1
hybrid://i/r/r1 → DSM://c/r/r1
hybrid://c/c1 → DSM://c/c1
hybrid://c/c2 → http://iptv1.bbc.co.uklc2_web
→ DSM://c/c2

In particular, it will be appreciated that the above examples show that part of the hybrid file system, defined by one mapping, may be located within part of the hybrid file system defined by another mapping. Also, within a single mapping, a list of multiple data sources may be defined such that if an object cannot be obtained from one data source, the next in the list will be tried automatically.

Where two or more mappings exist that may match a data request, the most complete matching mapping is preferably used to resolve the request. For example assuming that mappings for path names "/a/b/" and "/a/b/c/" are defined, a request for data using the reference "hybrid://a/b/c/d" is preferably resolved using the mapping for "/a/b/c/".

Each interactive application running in the receiver therefore has the ability to create its own mapping table, and customise its file access requirements. Thus, for each application, there is provided a specific look-up hierarchy to resolve data requests. Unlike existing systems, which have a fixed hierarchy for all applications, different applications can specify their own specific look-up hierarchy and so control the way in which a failure to retrieve data from a particular source should be handled.

The use of the mapping table also allows broadcasters to deliver data to an application flexibly, within the capabilities provided by the receiver. This will be illustrated with reference to the three example scenarios below, that are all based on a host receiver with access to a broadcast carousel and a file server via an IP connection

A first interactive application may offer the viewer access to a set of data that can be retrieved from the file server via the bi-directional IP connection. However, the data that is anticipated to be subject to the highest demand may also be delivered in the broadcast carousel, offering the potential to reduce the loading on the file server. In order to realise this benefit the hierarchy of data sources in the mapping table must specify first the broadcast carousel and second the IP connection.

This allows the broadcaster to change the data delivered in the broadcast carousel, in response to changing anticipated demand, without any need to change the interactive application.

Also, this means that if the broadcast carousel was to go off-air, say due to a technical fault, all file requests could still be resolved as they would fall back to the IP connection. Again, without any need to change the interactive application.

A second interactive application may offer the viewer access to a basic set of data that can be retrieved from the broadcast carousel. However, by accessing the file server via the bi-directional IP connection a more personalised version of the same set of data can be offered. In order to realise this benefit, and contrary to the first interactive application, the hierarchy of data sources in the mapping table must specify first the IP connection and second the broadcast carousel.

This means that if the IP connection was unavailable, say due to a technical fault, all file requests could still be resolved as they would fall back to the broadcast carousel, without any need to change the interactive application. Whilst this would not offer the most ideal viewer experience it would still offer an editorially controlled one.

Also, since the interactive application would still work even if the IP connection was unavailable, this interactive application could also be run on broadcast-only receivers deployed in the platform, i.e, the same application could be used for both hybrid and broadcast-only receivers.

A third interactive application may offer the viewer access to a basic set of data that can be retrieved from the broadcast carousel. However, by accessing the file server via the bi-directional IP connection an extended set of data can be offered. In order to realise this benefit, and contrary to the first and second interactive applications, the hierarchy of data sources in the mapping table must specify the IP connection as the source of some of the data and the broadcast carousel as the source of the remaining data.

This allows the same interactive application to be run on both hybrid and broadcast-only receivers deployed in the platform. It also provides a means to appropriately control the navigation that is presented to the viewer, e.g. to avoid presenting navigation to content that cannot be accessed, without the need for the application to query the availability of possible data sources. This is possible since different versions of the same content item, such as a list of menu options, can be provided by each data source as appropriate.

Additionally, the mapping table in the hybrid receiver may be configured to receive commands setting up the mapping table from applications outside of the receiver, such as those running on a broadcaster server. This allows broadcasters to reprogram the mapping table as desired. An SHF command like those described above can be transmitted to the interactive receiver either by the broadcast carousel or by the internet connection to update file location information, if a file location is altered by the broadcaster, or to alter the look-up order so that the best transmission technique is used. For example, following on from the examples above, a broadcaster may wish to change the transmission method from network connection to broadcast carousel, and may do this by either relying on a suitably arranged hierarchy of look-up requests in the mapping table, or alternatively, by reprogramming the mapping table based on the new data source.

The look-up hierarchy may also be implemented to include extra conditions that are checked before resolving a data access request. For example, time of day, or date may be used to divert data requests to an alternative data source when the preferred data source undergoes maintenance procedures. A running application can also make changes to the mapping table, if required, depending on the return value of any function that can be used to query the capabilities of the host receiver.

Thus, the preferred embodiment enables an interactive application to reference data within the hybrid file system without needing to know the specific data source from which the data will actually be obtained. It also allows applications to be authored with minimal knowledge of the actual data delivery mechanism(s) to be used when deployed. Additionally, a single application can be authored that, when delivered to different types of receiver (e.g. broadcast-only and hybrid), adapts to the available data delivery mechanisms e.g., whether there is an IP connection. Furthermore, applications that make use of a particular data source, such as a broadcast carousel or file server accessible via an IP connection, can be authored so as to fail gracefully in the event of loss of that data source, and existing applications may not require significant changes to support new data sources.

Although, the use of the hybrid file system has been illustrated with respect to multiple data sources, it also provides advantages when only a single data source is available but flexibility in terms of the receiver is required. For example, where an application is configured to run on both standard (SD) and high definition (HD) receivers, the running application could query whether the receiver it was running on is a standard or high definition device, and set up the mapping table accordingly. A request for image data from "hybrid://image/" could then be arranged to correspond to the directory object "/images/hd/" or "/images/sd/" at the data source. This would allow the same application to be used in the case of both types of receiver.

Although the preferred embodiment has been described as comprising a mapping table, it will be appreciated that the mapping need not be provided in tabular form. Alternatively, the mapping may be expressed as a list of rules or any other suitable data structure.

Also, although in the illustrative examples, only one or two data access locations have been provided for each path name, it will be appreciated that a path name could be mapped to any number of locations without confusion providing the locations are accessed in order.

Furthermore, although the data has been described largely in terms of files and directories, any suitable data content, or data delivery and storage protocols may be employed. Data may for example be streamed to the receiver using an appropriate data location reference.

## Claims

1. An interactive television device for accessing data from one or more data sources, wherein one or more interactive applications are running on the interactive television device, and the device comprises:
a memory space for storing mappings between one or more full or partial path names and one or more data access locations on the one or more data sources, wherein different mappings can be configured for each of one or more respective applications;
a processor configured to perform the steps of:
i) receiving an instruction from a first application to set a mapping between a first full or partial path name and a first data access location, such that a request from the first application for data from the first path name is mapped to the first data access location;
ii) receiving an instruction from the first application to set a mapping between the first full or partial path name and a second data access location, such that a request from the first application for data from the first path name is mapped to the second data access location, if the first is unavailable;
iii) storing the mappings instructed by the first application in the memory space, in respect of the first application; and
iv): receiving a request from the first application for data from the first path name, and with reference to the mappings stored in the memory space, converting this to a request for data from the first data access location, or if that is unavailable, the second data access location.

2. The interactive television device of claim 1, wherein the processor is configured to:
receive from the first application, an instruction to set a mapping between a second full or partial path name and one or more data access locations, and
store the mapping in memory space in respect of the first application.

3. The interactive television device of claim 2, wherein the processor is configured to:
receive from the first application, an instruction to set a mapping between a first partial path name and one or more data access locations, and an instruction to set a mapping between a second path name and one or more data access locations, wherein the second path name comprises the first path name appended with an additional path names elements; and
store the mappings in the memory space.

4. The interactive television device of claim 1, 2 or 3, when the processor is configured to:
receive from a second application, an instruction to set a mapping between the first, second or another full or partial path name and one or more data access locations, the mapping being independent of that set for the first application,
and store the mapping in memory in respect of the second application in the memory space.

5. The interactive television device of any preceding claim, wherein the data access location includes one of a file or a directory.

6. The interactive television device of any preceding claim, wherein a partial path name specifies a directory.

7. The interactive television device of claim 1, wherein the processor is configured to define a mapping between a default path name and a default data access location, such that a request from an application for data from the default path name is mapped to the default data access location if no other mapping has been stored for that application.

8. The interactive television device of claim 1, wherein the one or more data sources include a broadcast stream from a broadcaster, a network connection, and/or a local storage device, or an internal storage device.

9. The interactive television device of any preceding claim, wherein the processor is configured to:
receive an instruction from a third application to set for the first application a mapping between the first path name and a third data access location, such that a request from the first application for data from the first path name is mapped to the third data access location; and
store the mapping instructed by the third application in the memory space, in respect of the first application; wherein the third application is running on the same device as the first application, or a device remote from it.

10. The interactive television device of claim 9, wherein the third application is an application running on the computer system of a broadcaster, such that the broadcaster can reconfigure a mapping for an application remotely.

11. The interactive television device of any preceding claim, wherein the data access locations are present on at least two data sources.

12. The interactive television device of any preceding claim, wherein the request for data received from the first application includes a first reference
comprising the first partial path name appended with additional path name elements, and the mapping causes the received request for data to be converted into a request for data that includes a second reference comprising the first data access location appended with the additional path name elements, or if the first data access location is unavailable, into a request for data that includes a second reference comprising the second data access location appended with the additional path name elements.

13. The interactive television device of any preceding claim, wherein the processor is configured to, when two or more mappings are available that match to a data request received from an application, convert the data request based on the most complete mapping stored in the memory space.

14. A method for operating an interactive television device to access data from one or more data sources, wherein one or more interactive applications are running on the interactive television device, the method comprising:
i) providing a memory space for storing mappings between one or more full or partial path names and one or more data access locations on one or more data sources, wherein different mappings can be configured for each of one or more respective applications;
ii) receiving an instruction from a first application to set a mapping between a first full or partial path name and a first data access location, such that a request from the first application for data from the first path name is mapped to the first data access location;
iii) receiving an instruction from the first application to set a mapping between the first full, or partial path name and a second data access location, such that a request from the first application for data from the first path name is mapped to the second data access location, if the first is unavailable;
iv) storing the mappings instructed by the first application in the memory space, in respect of the first application; and
v) receiving a request from the first application for data from the first path name, and and with reference to the mappings stored in the memory space, converting this to a request for data from the first data access location, or if that is unavailable, the second data access location.

15. The method of claim 14, comprising:
receiving from the first application, an instruction to set a mapping between a second full or partial path name and one or more data access locations, and
storing the mapping in memory space in respect of the first application.

16. The method of claim 17, comprising:
receiving from the first application, an instruction to set a mapping between a first partial path name and one or more data access locations, and an
instruction to set a mapping between a second path name and one or more data access locations, wherein the second path name comprises the first path name appended with an additional path names elements; and
storing the mappings in the memory space.

17. The method of claim 14, 15 or 16, comprising:
receiving from a second application, an instruction to set a mapping between the first, second or another full or partial path name and one or more data access locations, the mapping being independent of that set for the first application,
and storing the mapping in memory in respect of the second application in the memory space.

18. The method of any of claims 14 to 17, wherein the data access location includes one of a file or a directory.

19. The method of any of claims 14 to 18, wherein a partial path name specifies a directory.

20. The method of claim 14, comprising defining a mapping between a default path name and a default data access location, such that a request from an application for data from the default path name is mapped to the default data access location if no other mapping has been stored for that application.

21. The method of claim 20, wherein the one or more data sources include a broadcast stream from a broadcaster, a network connection, and/or a local storage device, or an internal storage device.

22. The method of any of claims 13 to 21, comprising:
receiving an instruction from a third application to set for the first application a mapping between the first path name and a third data access location, such that a request from the first application for data from the first path name is mapped to the third data access location; and
storing the mapping instructed by the third application in the memory space, in respect of the first application; wherein the third application is running on the same device as the first application, or a device remote from it.

23. The method of claim 22, wherein the third application is an application running on the computer system of a broadcaster, such that the broadcaster can reconfigure a mapping for an application remotely.

24. The method of any of claims 14 to 23, wherein the data access locations are present on at least two data sources.

25. The method of any of claims 14 to 24, wherein the request for data received from the first application includes a first reference comprising the first partial path name appended with additional path name elements, and the mapping causes the received request for data to be converted into a request for data that includes a second reference comprising the first data access location appended with the additional path name elements, or if the first data access location is unavailable, into a request for data that includes a second reference comprising the second data access location appended with the additional path name elements.

26. The method of any of claims 14 to 25, comprising, when two or more mappings are available that match to a data request received from an application, converting the data request based on the most complete mapping stored in the memory space.

27. A computer program product comprising a computer readable medium on which computer code is stored, wherein when the computer code is executed on a computer the computer is caused to perform the steps of any of claims 14 to 26.

## Patentansprüche

1. Interaktives Fernsehgerät für einen Zugriff auf Daten von einer oder mehreren Datenquellen, wobei eine oder mehrere interaktive Anwendungen auf dem interaktiven Fernsehgerät laufen und das Gerät Folgendes umfasst:
einen Speicherraum zum Speichern von Zuordnungen zwischen einem oder mehreren vollständigen oder teilweisen Pfadnamen und einer oder mehreren Datenzugriffspositionen auf der einen oder den mehreren Datenquellen, wobei für jede der einen oder mehreren jeweiligen Anwendungen unterschiedliche Zuordnungen konfiguriert sein können,
einen Prozessor, der dafür konfiguriert ist, die folgenden Schritte durchzuführen:
i) das Empfangen einer Anweisung von einer ersten Anwendung, eine Zuordnung zwischen einem ersten vollständigen oder teilweisen Pfadnamen und einer ersten Datenzugriffsposition festzusetzen derart, dass eine Anforderung von der ersten Anwendung nach Daten von dem ersten Pfadnamen der ersten Datenzugriffsposition zugewiesen wird,
ii) das Empfangen einer Anweisung von der ersten Anwendung, eine Zuordnung zwischen dem ersten vollständigen oder teilweisen Pfadnamen und einer zweiten Datenzugriffsposition festzusetzen derart, dass eine Anforderung von der ersten Anwendung nach Daten von dem ersten Pfadnamen der zweiten Datenzugriffsposition zugewiesen wird, falls die erste nicht verfügbar ist,
iii) das Speichern der durch die erste Anwendung angewiesenen Zuordnungen in dem Speicherraum, in Bezug auf die erste Anwendung, und
iv) das Empfangen einer Anforderung von der ersten Anwendung nach Daten von dem ersten Pfadnamen und unter Bezugnahme auf die in dem Speicherraum gespeicherten Zuordnungen, das Umwandeln derselben zu einer Anforderung nach Daten von der ersten Datenzugriffsposition oder, falls diese nicht verfügbar ist, der zweiten Datenzugriffsposition.

2. Interaktives Fernsehgerät nach Anspruch 1, wobei der Prozessor für Folgendes konfiguriert ist:
von der ersten Anwendung eine Anweisung zu empfangen, eine Zuordnung zwischen einem zweiten vollständigen oder teilweisen Pfadnamen und einer oder mehreren Datenzugriffspositionen festzusetzen, und
die Zuordnung in dem Speicherraum in Bezug auf die erste Anwendung zu speichern.

3. interaktive Fernsehgerät nach Anspruch 2, wobei der Prozessor für Folgendes konfiguriert ist:
von der ersten Anwendung eine Anweisung, eine Zuordnung zwischen einem ersten teilweisen Pfadnamen und einer oder mehreren Datenzugriffspositionen festzusetzen, und eine Anweisung, eine Zuordnung zwischen einem zweiten Pfadnamen und einer oder mehreren Datenzugriffspositionen festzusetzen, zu empfangen, wobei der zweite Pfadname den ersten Pfadnamen, mit angefügten zusätzlichen Pfadnamenelementen, umfasst, und
die Zuordnungen in dem Speicherraum zu speichern.

4. Interaktives Fernsehgerät nach Anspruch 1, 2 oder 3, wobei der Prozessor für Folgendes konfiguriert ist:
von einer zweiten Anwendung eine Anweisung zu empfangen, eine Zuordnung zwischen dem ersten, dem zweiten oder einem anderen vollständigen oder teilweisen Pfadnamen und einer oder mehreren Datenzugriffspositionen festzusetzen, wobei die Zuordnung unabhängig von der für die erste Anwendung festgesetzten ist,
und die Zuordnung in dem Speicher in Bezug auf die zweite Anwendung in dem Speicherraum zu speichern.

5. Interaktives Fernsehgerät nach einem der vorhergehenden Ansprüche, wobei die Datenzugriffsposition entweder eine Datei oder ein Verzeichnis einschließt.

6. Interaktives Fernsehgerät nach einem der vorhergehenden Ansprüche, wobei ein teilweiser Pfadname ein Verzeichnis spezifiziert.

7. Interaktives Fernsehgerät nach Anspruch 1, wobei der Prozessor dafür konfiguriert ist, eine Zuordnung zwischen einem Standard-Pfadnamen und einer Standard-Datenzugriffsposition zu definieren derart, dass eine Anforderung von einer Anwendung nach Daten von dem Standard-Pfadnamen der Standard-Datenzugriffsposition zugewiesen wird, falls keine andere Zuordnung für diese Anwendung gespeichert worden ist.

8. Interaktives Fernsehgerät nach Anspruch 1, wobei die eine oder die mehreren Datenquellen einen Rundsendungsstrom von einem Rundsender, eine Netzverbindung und/oder ein lokales Speichergerät oder ein internes Speichergerät einschließen.

9. Interaktives Fernsehgerät nach einem der vorhergehenden Ansprüche, wobei der Prozessor für Folgendes konfiguriert ist:
von einer dritten Anwendung eine Anweisung zu empfangen, eine Zuordnung zwischen dem ersten Pfadnamen und einer dritten Datenzugriffsposition festzusetzen derart, dass eine Anforderung von der ersten Anwendung nach Daten von dem ersten Pfadnamen der dritten Datenzugriffsposition zugewiesen wird, und
die durch die dritte Anwendung angewiesene Zuordnung in dem Speicherraum, in Bezug auf die erste Anwendung, zu speichern, wobei die dritte Anwendung auf demselben Gerät wie die erste Anwendung oder einem von demselben entfernten Gerät läuft.

10. Interaktives Fernsehgerät nach Anspruch 9, wobei die dritte Anwendung eine Anwendung ist, die auf der Rechneranlage eines Rundsenders läuft derart, dass der Rundsender eine Zuordnung für eine Anwendung von fern neu konfigurieren kann.

11. Interaktives Fernsehgerät nach einem der vorhergehenden Ansprüche, wobei die Datenzugangspositionen auf wenigstens zwei Datenquellen vorhanden sind.

12. Interaktives Fernsehgerät nach einem der vorhergehenden Ansprüche, wobei die von der ersten Anwendung empfangene Anforderung nach Daten eine erste Bezugnahme einschließt, die den ersten teilweisen Pfadnamen, mit angefügten zusätzlichen Pfadnamenelementen, umfasst, und die Zuordnung bewirkt, dass die empfangende Anforderung nach Daten umgewandelt wird in eine Anforderung nach Daten, die eine zweite Bezugnahme einschließt, welche die erste Datenzugangsposition mit den angefügten zusätzlichen Pfadnamenelementen umfasst, oder, falls die erste Datenzugangsposition nicht zugänglich ist, in eine Anforderung nach Daten, die eine zweite Bezugnahme einschließt, welche die zweite Datenzugangsposition mit den angefügten zusätzlichen Pfadnamenelementen umfasst.

13. Interaktives Fernsehgerät nach einem der vorhergehenden Ansprüche, wobei der Prozessor dafür konfiguriert ist, wenn zwei oder mehr Zuordnungen, die zu einer von einer Anwendung empfangenen Datenanforderung passen, verfügbar sind, die Datenanforderung auf der Grundlage der vollständigsten Zuordnung umzuwandeln, die in dem Speicherraum gespeichert ist.

14. Verfahren zum Betreiben eines interaktiven Fernsehgeräts für einen Zugriff auf Daten von einer oder mehreren Datenquellen, wobei eine oder mehrere interaktive Anwendungen auf dem interaktiven Fernsehgerät laufen, wobei das Verfahren Folgendes umfasst:
i) das Bereitstellen eines Speicherraums zum Speichern von Zuordnungen zwischen einem oder mehreren vollständigen oder teilweisen Pfadnamen und einer oder mehreren Datenzugriffspositionen auf einer oder mehreren Datenquellen, wobei für jede von einer oder mehreren jeweiligen Anwendungen unterschiedliche Zuordnungen konfiguriert sein können,
ii) das Empfangen einer Anweisung von einer ersten Anwendung, eine Zuordnung zwischen einem ersten vollständigen oder teilweisen Pfadnamen und einer ersten Datenzugriffsposition festzusetzen derart, dass eine Anforderung von der ersten Anwendung nach Daten von dem ersten Pfadnamen der ersten Datenzugriffsposition zugewiesen wird,
iii) das Empfangen einer Anweisung von der ersten Anwendung, eine Zuordnung zwischen dem ersten vollständigen oder teilweisen Pfadnamen und einer zweiten Datenzugriffsposition festzusetzen derart, dass eine Anforderung von der ersten Anwendung nach Daten von dem ersten Pfadnamen der zweiten Datenzugriffsposition zugewiesen wird, falls die erste nicht verfügbar ist,
iv) das Speichern der durch die erste Anwendung angewiesenen Zuordnungen in dem Speicherraum, in Bezug auf die erste Anwendung, und
v) das Empfangen einer Anforderung von der ersten Anwendung nach Daten von dem ersten Pfadnamen und unter Bezugnahme auf die in dem Speicherraum gespeicherten Zuordnungen, das Umwandeln derselben zu einer Anforderung nach Daten von der ersten Datenzugriffsposition oder, falls diese nicht verfügbar ist, der zweiten Datenzugriffsposition.

15. Verfahren nach Anspruch 14, das Folgendes umfasst:
das Empfangen einer Anweisung von der ersten Anwendung, eine Zuordnung zwischen einem zweiten vollständigen oder teilweisen Pfadnamen und einer oder mehreren Datenzugriffspositionen festzusetzen, und
das Speichern der Zuordnung in dem Speicherraum in Bezug auf die erste Anwendung.

16. Verfahren nach Anspruch 17, das Folgendes umfasst:
das Empfangen, von der ersten Anwendung, einer Anweisung, eine Zuordnung zwischen einem ersten teilweisen Pfadnamen und einer oder mehreren Datenzugriffspositionen festzusetzen, und einer
Anweisung, eine Zuordnung zwischen einem zweiten Pfadnamen und einer oder mehreren Datenzugriffspositionen festzusetzen, wobei der zweite Pfadname den ersten Pfadnamen, mit angefügten zusätzlichen Pfadnamenelementen, umfasst, und
das Speichern der Zuordnungen in dem Speicherraum.

17. Verfahren nach Anspruch 14, 15 oder 16, das Folgendes umfasst:
das Empfangen einer Anweisung von einer zweiten Anwendung, eine Zuordnung zwischen dem ersten, dem zweiten oder einem anderen vollständigen oder teilweisen Pfadnamen und einer oder mehreren Datenzugriffspositionen festzusetzen, wobei die Zuordnung unabhängig von der für die erste Anwendung festgesetzten ist,
und das Speichern der Zuordnung in dem Speicher in Bezug auf die zweite Anwendung in dem Speicherraum.

18. Verfahren nach einem der Ansprüche 14 bis 17, wobei die Datenzugriffsposition entweder eine Datei oder ein Verzeichnis einschließt.

19. Verfahren nach einem der Ansprüche 14 bis 18, wobei ein teilweiser Pfadname ein Verzeichnis spezifiziert.

20. Verfahren nach Anspruch 14, welches das Definieren einer Zuordnung zwischen einem Standard-Pfadnamen und einer Standard-Datenzugriffsposition umfasst derart, dass eine Anforderung von einer Anwendung nach Daten von dem Standard-Pfadnamen der Standard-Datenzugriffsposition zugewiesen wird, falls keine andere Zuordnung für diese Anwendung gespeichert worden ist.

21. Verfahren nach Anspruch 20, wobei die eine oder die mehreren Datenquellen einen Rundsendungsstrom von einem Rundsender, eine Netzverbindung und/oder ein lokales Speichergerät oder ein internes Speichergerät einschließen.

22. Verfahren nach einem der Ansprüche 13 bis 21, das Folgendes umfasst:
das Empfangen einer Anweisung von einer dritten Anwendung, eine Zuordnung zwischen dem ersten Pfadnamen und einer dritten Datenzugriffsposition festzusetzen derart, dass eine Anforderung von der ersten Anwendung nach Daten von dem ersten Pfadnamen der dritten Datenzugriffsposition zugewiesen wird, und
das Speichern der durch die dritte Anwendung angewiesenen Zuordnung in dem Speicherraum, in Bezug auf die erste Anwendung, wobei die dritte Anwendung auf demselben Gerät wie die erste Anwendung oder einem von demselben entfernten Gerät läuft.

23. Verfahren nach Anspruch 22, wobei die dritte Anwendung eine Anwendung ist, die auf der Rechneranlage eines Rundsenders läuft derart, dass der Rundsender eine Zuordnung für eine Anwendung von fern neu konfigurieren kann.

24. Verfahren nach einem der Ansprüche 14 bis 23, wobei die Datenzugangspositionen auf wenigstens zwei Datenquellen vorhanden sind.

25. Verfahren nach einem der Ansprüche 14 bis 24, wobei die von der ersten Anwendung empfangene Anforderung nach Daten eine erste Bezugnahme einschließt, die den ersten teilweisen Pfadnamen, mit angefügten zusätzlichen Pfadnamenelementen, umfasst, und die Zuordnung bewirkt, dass die empfangende Anforderung nach Daten umgewandelt wird in eine Anforderung nach Daten, die eine zweite Bezugnahme einschließt, welche die erste Datenzugangsposition mit den angefügten zusätzlichen Pfadnamenelementen umfasst, oder, falls die erste Datenzugangsposition nicht zugänglich ist, in eine Anforderung nach Daten, die eine zweite Bezugnahme einschließt, welche die zweite Datenzugangsposition mit den angefügten zusätzlichen Pfadnamenelementen umfasst.

26. Verfahren nach einem der Ansprüche 14 bis 25, das umfasst, wenn zwei oder mehr Zuordnungen, die zu einer von einer Anwendung empfangenen Datenanforderung passen, verfügbar sind, die Datenanforderung auf der Grundlage der vollständigsten Zuordnung umzuwandeln, die in dem Speicherraum gespeichert ist.

27. Rechnerprogrammerzeugnis, das ein rechnerlesbares Medium umfasst, auf dem Rechnercode gespeichert ist, wobei, wenn der Rechnercode auf einem Rechner ausgeführt wird, bewirkt wird, dass der Rechner die Schritte nach einem der Ansprüche 14 bis 26 durchführt.

## Revendications

1. Dispositif de télévision interactive pour accéder aux données venant d'une ou plusieurs sources de données, dans lequel une ou plusieurs applications interactives sont exécutées sur le dispositif de télévision interactive, et le dispositif comprend :
un espace de mémoire pour stocker des mappages entre un ou plusieurs noms de chemin complet ou partiel et un ou plusieurs emplacements d'accès de données sur les une ou plusieurs sources de données, dans lequel différents mappages peuvent être configurés individuellement pour une ou plusieurs applications respectives ;
un processeur configuré pour réaliser les étapes consistant à :
i) recevoir d'une première application une instruction visant à définir un mappage entre un premier nom de chemin complet ou partiel et un premier emplacement d'accès de données de manière qu'une requête de données venant du premier nom de chemin émise par la première application soit mappée au premier emplacement d'accès de données ;
ii) recevoir de la première application une instruction visant à définir un mappage entre le premier nom de chemin complet ou partiel et un deuxième emplacement d'accès de données de manière qu'une requête de données venant du premier nom de chemin émise par la première application soit mappée au deuxième emplacement d'accès de données, si le premier est indisponible ;
iii) stocker les mappages ordonnés par la première application dans l'espace de mémoire, par rapport à la première application ; et
iv) recevoir de la première application une requête de données venant du premier nom de chemin et, en référence aux mappages stockés dans l'espace de mémoire, convertir ceci en une requête de données venant du premier emplacement d'accès de données ou bien, en cas d'indisponibilité, du deuxième emplacement d'accès de données.

2. Dispositif de télévision interactive selon la revendication 1, dans lequel ledit processeur est configuré pour :
recevoir de la première application une instruction visant à définir un mappage entre un deuxième nom de chemin complet ou partiel et un ou plusieurs emplacements d'accès de données, et
stocker le mappage en espace de mémoire par rapport à la première application.

3. Dispositif de télévision interactive selon la revendication 2, dans lequel ledit processeur est configuré pour :
recevoir de la première application une instruction visant à définir un mappage entre un premier nom de chemin partiel et un ou plusieurs emplacements d'accès de données, et une instruction visant à définir un mappage entre un deuxième nom de chemin et un ou plusieurs emplacements d'accès de données, dans lequel le deuxième nom de chemin comprend le premier nom de chemin auquel des éléments supplémentaires de noms de chemin sont ajoutés ; et
stocker les mappages dans l'espace de mémoire.

4. Dispositif de télévision interactive selon la revendication 1, 2 ou 3, dans lequel le processeur est configuré pour :
recevoir d'une deuxième application une instruction visant à définir un mappage entre le premier, le deuxième ou un autre nom de chemin partiel et un ou plusieurs emplacements d'accès de données, le mappage étant indépendant de cet ensemble pour la première application,
et stocker le mappage en mémoire par rapport à la deuxième application dans l'espace de mémoire.

5. Dispositif de télévision interactive selon l'une quelconque des revendications précédentes, dans lequel l'emplacement d'accès aux données comprend un fichier et/ou un répertoire.

6. Dispositif de télévision interactive selon l'une quelconque des revendications précédentes, dans lequel un nom de chemin partiel spécifie un répertoire.

7. Dispositif de télévision interactive selon la revendication 1, dans lequel le processeur est configuré pour définir un mappage entre un nom de chemin par défaut et un emplacement d'accès de données par défaut de manière qu'une requête de données venant du nom de chemin par défaut émise par une application soit mappée à l'emplacement d'accès de données par défaut si aucun autre mappage n'a été stocké pour cette application.

8. Dispositif de télévision interactive selon la revendication 1, dans lequel les une ou plusieurs sources de données comprennent un flux de données venant d'un diffuseur, d'une connexion réseau, et/ou d'un dispositif de stockage local ou interne.

9. Dispositif de télévision interactive selon l'une quelconque des revendications précédentes, dans lequel le processeur est configuré pour :
recevoir une instruction émise par une troisième application visant à définir pour la première application un mappage entre le premier nom de chemin et un troisième emplacement d'accès de données de manière qu'une requête de données venant du premier nom de chemin émise par la première application soit mappée au troisième emplacement d'accès de données ; et
stocker le mappage ordonné par la troisième application dans l'espace de mémoire, par rapport à la première application ; dans lequel la troisième application est exécutée sur le même dispositif que la première application, ou sur un dispositif distant de celle-ci.

10. Dispositif de télévision interactive selon la revendication 9, dans lequel la troisième application est une application exécutée sur le système d'ordinateur d'un diffuseur de manière que le diffuseur puisse reconfigurer à distance un mappage pour une application.

11. Dispositif de télévision interactive selon l'une quelconque des revendications précédentes, dans lequel les emplacements d'accès de données sont présents sur au moins deux sources de données.

12. Dispositif de télévision interactive selon l'une quelconque des revendications précédentes, dans lequel la requête de données reçue de la première application inclut une première référence comprenant le premier nom de chemin partiel auquel des éléments supplémentaires de nom de chemin sont ajoutés, et le mappage fait que la requête de données reçue est convertie en une requête de données qui inclut une deuxième référence comprenant le premier emplacement d'accès de données auquel les éléments supplémentaires de nom de fichier sont ajoutés ou bien, si le premier emplacement d'accès de données est indisponible, en une requête de données qui inclut une deuxième référence comprenant le deuxième emplacement d'accès de données auquel les éléments supplémentaires de nom de chemin sont ajoutés.

13. Dispositif de télévision interactive selon l'une quelconque des revendications précédentes, dans lequel ledit processeur est configuré pour, lorsque deux mappages correspondant à une requête de données reçue d'une application sont disponibles, convertir la requête de données sur la base du mappage le plus complet dans l'espace de mémoire.

14. Procédé pour exploiter un dispositif de télévision interactive afin d'accéder aux données venant d'une ou plusieurs sources de données, dans lequel une ou plusieurs applications interactives sont exécutées sur le dispositif de télévision interactive, le procédé comprenant les étapes suivantes :
i) fournir un espace de mémoire pour stocker des mappages entre un ou plusieurs noms de chemin complets ou partiels et un ou plusieurs emplacements d'accès de données sur une ou plusieurs sources de données, dans lequel différents mappages peuvent être configurés individuellement pour une ou plusieurs applications respective
ii) recevoir une instruction d'une première application visant à définir un mappage entre un premier nom de chemin complet ou partiel et un premier emplacement d'accès de données de manière qu'une requête de données venant du premier nom de chemin émise par la première application soit mappée au premier emplacement d'accès de données ;
iii) recevoir une instruction de la première application visant à définir un mappage entre le premier nom de chemin complet ou partiel et un deuxième emplacement d'accès de données de manière qu'une requête de données venant du premier nom de chemin émise par la première application soit mappée au deuxième emplacement d'accès de données, si le premier est indisponible ;
iv) stocker les mappages ordonnés par la première application dans l'espace de mémoire, par rapport à la première application ; et
v) recevoir une requête de données venant du premier nom de chemin émise par la première application, et, en référence aux mappages stockés dans l'espace de mémoire, convertir ceci en une requête de données venant du premier emplacement d'accès de données, ou en cas d'indisponibilité, du deuxième emplacement d'accès de données.

15. Procédé selon la revendication 14 comprenant les étapes consistant à :
recevoir de la première application une instruction visant à définir un mappage entre un deuxième nom de chemin complet ou partiel et un ou plusieurs emplacements d'accès de données, et
stocker le mappage en espace de mémoire par rapport à la première application.

16. Procédé selon la revendication 17 comprenant les étapes consistant à :
recevoir de la première application une instruction visant à définir un mappage entre un premier nom de chemin partiel et un ou plusieurs emplacements d'accès de données, et une
instruction visant à définir un mappage entre un deuxième nom de chemin et un ou plusieurs emplacements d'accès de données, dans lequel le deuxième nom de chemin comprend le premier nom de chemin auquel des éléments supplémentaires de noms de chemin sont ajoutés ; et stocker les mappages dans l'espace de mémoire.

17. Procédé de la revendication 14, 15 ou 16 comprenant les étapes consistant à :
recevoir d'une deuxième application une instruction visant à définir un mappage entre le premier, le deuxième ou un autre nom de chemin partiel et un ou plusieurs emplacements d'accès de données, le mappage étant indépendant de cet ensemble pour la première application, et stocker le mappage en mémoire par rapport à la deuxième application dans l'espace de mémoire.

18. Procédé selon l'une quelconque des revendications 14 à 17, dans lequel l'emplacement d'accès aux données comprend un fichier et/ou un répertoire.

19. Procédé selon l'une quelconque des revendications 14 à 18, dans lequel un nom de chemin partiel spécifie un répertoire.

20. Procédé selon la revendication 14, comprenant la définition d'un mappage entre un nom de chemin par défaut et un emplacement d'accès de données par défaut de manière qu'une requête de données venant du nom de chemin par défaut émise par une application soit mappée à l'emplacement d'accès de données par défaut si aucun autre mappage n'a été stocké pour cette application.

21. Procédé selon la revendication 20, dans lequel les une ou plusieurs sources de données comprennent un flux de données venant d'un diffuseur, d'une connexion réseau, et/ou d'un dispositif de stockage local ou interne.

22. Procédé selon l'une quelconque des revendications 13 à 21, comprenant les étapes consistant à :
recevoir une instruction d'une troisième application visant à définir pour la première application un mappage entre le premier nom de chemin et un troisième emplacement d'espace de mémoire de manière qu'une requête de données venant du premier nom de chemin émise par la première application soit mappée au troisième emplacement d'accès de données ; et
stocker le mappage ordonné par la troisième application dans l'espace de mémoire par rapport à la première application ; dans lequel la troisième application est exécutée sur le même dispositif que la première application, ou sur un dispositif distant de celle-ci.

23. Procédé selon la revendication 22, dans lequel la troisième application est une application exécutée sur le système d'ordinateur d'un diffuseur de manière que le diffuseur puisse reconfigurer à distance un mappage pour une application.

24. Procédé selon l'une quelconque des revendications 14 à 23, dans lequel les emplacements d'accès de données sont présents sur au moins deux sources de données.

25. Procédé selon l'une quelconque des revendications 14 à 24, dans lequel la requête de données reçue de la première application inclut une première référence comprenant le premier nom de chemin partiel auquel des éléments supplémentaires de nom de chemin sont ajoutés, et le mappage fait que la requête de données reçue est convertie en une requête de données qui inclut une deuxième référence comprenant le premier emplacement d'accès de données auquel les éléments supplémentaires de nom de fichier sont ajoutés ou bien, si le premier emplacement d'accès de données est indisponible, en une requête de données qui inclut une deuxième référence comprenant le deuxième emplacement d'accès de données auquel les éléments supplémentaires de nom de chemin sont ajoutés.

26. Procédé selon l'une quelconque des revendications 14 à 25, dans lequel, lorsque au moins deux mappages correspondant à une requête de données reçue d'une application sont disponibles, une conversion de la requête de données est effectuée sur la base du mappage le plus complet dans l'espace de mémoire.

27. Produit logiciel comprenant un support lisible par ordinateur sur lequel le code informatique est stocké, dans lequel, quand le code informatique est exécuté sur un ordinateur, l'ordinateur réalise les étapes selon l'une quelconque des étapes 14 à 26.
